(19) Europäisches Patentamt
European Patent Office
Office européen des brevets

(11) **EP 2 773 811 B1**

(12) **EUROPEAN PATENT SPECIFICATION**

(45) Date of publication and mention
of the grant of the patent:
**19.07.2017 Bulletin 2017/29**

(21) Application number: **12780204.9**

(22) Date of filing: **02.11.2012**

(51) Int Cl.:
**D07B 1/02** (2006.01)

(86) International application number:
**PCT/EP2012/071714**

(87) International publication number:
**WO 2013/064627 (10.05.2013 Gazette 2013/19)**

(54) **POLYETHYLENE ROPE WITH LOW STRENGTH LOSS DURING USE**

POLYETHYLENSEIL MIT GERINGEM FESTIGKEITKEITSVERLUST BEIM GEBRAUCH

CORDE EN POLYÉTHYLÈNE AVEC UNE PERTE DE RÉSISTANCE RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2011 EP 11187442**

(43) Date of publication of application:
**10.09.2014 Bulletin 2014/37**

(73) Proprietor: **Teijin Aramid B.V.**
**6824 BM Arnhem (NL)**

(72) Inventors:
• **GRABANDT, Otto**
**NL-1391 RT Abcoude (NL)**
• **ELKINK, Frits**
**NL-6814 KC Arnhem (NL)**
• **VAN BERKEL, Bertil**
**NL-6851 GC Huissen (NL)**

(74) Representative: **CPW GmbH**
**Kasinostraße 19-21**
**42103 Wuppertal (DE)**

(56) References cited:
**EP-A1- 2 014 445        WO-A1-2010/003971
US-A- 3 380 243        US-A- 5 180 636
US-A1- 2004 267 313        US-A1- 2010 101 833**

## Description

Ropes based on high molecular weight polyethylene are known in the art and have been described for numerous purposes.

US 2010/0101833 describes outer woven cover of tapes of high, and preferably ultra high, molecular weight polyethylene to increase the abrasion resistance of organic fiber based ropes and cords. The cord is generally made of a plurality of fibres or tapes, preferably made of a plurality of parallel, braided, twisted or woven fibres or tapes. This document does not describe specific structures for such cords. The cord may comprise fibers and/or tapes made of at least one polymer selected from ultra-high molecular weight polyethylene, polyethylene, polypropylene, polyamide, polyester, aromatic polyamide and aromatic copolyester. This document does not describe tapes with a specific width to thickness ratio or with a specific solvent content. Some of the rope applications described include strong low-elongation ropes and shock absorbing ropes for rescue, rock climbing, for caving and arborists, floating ropes for marine uses and river uses and soft responsive rappel ropes.

In some applications, e.g., when the rope is used as mooring line, the rope suffers from tension-tension fatigue. That is, the rope is subjected to cyclic increase and decrease of tension, and this has been found to detrimentally affect the properties of the rope, in particular for larger-diameter ropes. In other applications, e.g., where the rope is used over pulleys, the rope suffers from bending fatigue. That is, the properties of the rope deteriorate when the rope is subjected repeatedly to bending. A particular issue is that the strength of the rope under use conditions decreases as compared to the strength of the rope before it has been used.

This problem is solved by the present invention.

The present invention pertains to a rope comprising polyethylene elongate elements oriented in the length direction of the rope wherein for at least part of the elongate elements the distance of the element to a central longitudinal rope axis varies over the length of the rope, the polyethylene elongate elements comprising tapes of ultra-high molecular weight polyethylene, the tapes having a width to thickness ratio of at least 10 and a polymer solvent content below 0.05 wt.%. In particular, the distance of at least part of the elements to the central longitudinal rope axis varies over the length of the rope between a longitudinal line which is at most 30% from the outside of the rope and a longitudinal line which is at most 30% from the central longitudinal axis of the rope.

It has been found that the particular combination of a rope wherein the distance of the elements to the central longitudinal rope axis varies over the length of the rope between a longitudinal line which is at most 30% from the outside of the rope and a longitudinal line which is at most 30% from the central longitudinal axis of the rope, wherein the rope comprises polyethylene tapes with the specified properties results in a rope with a high strength-strength ratio, that is, a high ratio between the strength of the rope under use conditions and the strength of the rope before it has been used. The rope according to the invention also has a high strength under use conditions, as will be defined further on.

As indicated above, it is a feature of the present invention that for at least part of the elongate elements the distance of the element to a central longitudinal rope axis varies over the length of the rope between a longitudinal line which is at most 30% from the outside of the rope and a longitudinal line which is at most 30% from the central longitudinal axis of the rope.

In one embodiment, at least 70% of the elements meet the requirement that the distance of the element to a central longitudinal rope axis varies over the length of the rope between a longitudinal line which is at most 30% from the outside of the rope and a longitudinal line which is at most 30% from the central longitudinal axis of the rope, more in particular at least 80%, still more in particular at least 90%. The best effects will be obtained when as many elements as possible meet this requirement.

In one embodiment, the distance of at least part of the elements to the central longitudinal rope axis varies over the length of the rope between a longitudinal line which is at most 20% from the outside of the rope, more in particular at most 10% from the outside of the rope, and a longitudinal line which is at most 30% from the central longitudinal axis of the rope, in particular at most 20% from the central longitudinal axis of the rope, more in particular at most 10% from the central longitudinal axis of the rope.

In one embodiment, at least part of the elongated elements meander from locations nearer the central longitudinal axis of the rope to locations nearer the outside of the rope.

In one embodiment the distance variation of at least part of the elements is a repeating oscillation, wherein the ratio between the wavelength of the oscillation and the diameter of the rope is at most 15. In one embodiment, the ratio between the wavelength of the oscillation and the diameter of the rope is at most 12, more in particular at most 10.

The wavelength of the oscillation is defined as the distance, measured in the direction of propagation of a wave, between two successive points in the wave that are characterized by the same phase of oscillation.

In one embodiment, at least part of the tapes in the rope according to the invention show a helix angle of more than 10°, in particular more than 14°, still more in particular at least 16°. In one embodiment, at least 70% of the tapes show a helix angle in the ranges indicated above, more in particular at least 80%, still more in particular at least 90%.

The rope according to the invention has a high strength-strength ratio, which is defined as the ratio between the strength under use conditions and the strength of the rope before it has been used (fresh strength). The strength-strength ratio generally is at least 50%, preferably at least 70%, in particular at least 80%.

The rope according to the invention has a high strength under use conditions. The strength under use conditions is defined as the strength that is obtained when the rope is subjected repeatedly to a tension cycle and then immediately subjected to a tensile test. The test method involved an immediate ramp up of the load after the cyclic loading has stopped. The time of the switch from the cyclic loading program to cable failure after the load ramp up should be less then 1/10 of the time constant of cooling. This time constant can be calculated on the basis of material properties or can be measured in a preceding experiment by logging the rope centre temperature after stopping the cyclic loading.

In one embodiment the tensile strength under use conditions of the rope according to the invention is at least 0.7 GPa, in particular at least 1.0 GPa, more in particular at least 1.2 GPa, in particular at least 1.5 GPa. Depending on the strength of the tapes and the strength-strength ratio, the strength under use conditions may be even higher, more in particular at least 1.8 GPa, even more in particular at least 2.0 GPa, still more in particular at least 2.2 GPa, Tensile strength under use condition is determined as described above.

The rope according to the invention has a high fresh strength, which is the strength of the rope before it has been subjected to any kind of tension, whether under use conditions or under test conditions. More in particular, the rope according to the invention generally has a fresh tensile strength of at least 1.2 GPa, in particular at least 1.5 GPa, more in particular at least 1.8 GPa, even more in particular at least 2.0 GPa, still more in particular at least 2.2 GPa. Depending on the strength of the tapes, the fresh strength may be even higher, e.g., at least 3.0 GPa.. Tensile strength is determined in accordance with Cordage Institute International Standard CI1500.

The diameter of the rope may vary depending on the intended use of the rope. It has been found that the present invention is of particular interest for ropes with a diameter of at least 25 mm, in particular at least 30 mm, more in particular at least 40 mm, even more in particular at least 50 mm, still more in particular at least 60 mm, or even at least 70 mm. In some embodiments, the diameter may be at least 100 mm. The rope diameter will generally not be above 500 mm.

Depending on the configuration of the rope, the cross-section may be circular or non-circular. This may be defined by way of the aspect ratio, which is the ratio between the longest and the shortest diameter of the cross-section of the rope. In one embodiment the aspect ratio is in the range of 1 to 1.2, indicating a circular rope. In another embodiment the aspect ratio is above 1.2, indicating a non-circular rope. In one embodiment, the aspect ratio is in the range of above 1.2 to 4, more in particular above 1.2 to 3. A non-circular rope may be advantageous in bend over sheave applications. For a non-circular rope the word diameter as used in the present specification is intended to refer to the effective diameter, which is the diameter of a rope with a circular cross-section with the same mass per length as the non-circular rope at issue.

In one embodiment the rope according to the invention has a modulus of at least 100 N/tex, in particular at least 120 N/tex, more in particular at least 140 N/tex, at least 180 N/tex, or even at least 200 N/tex. The modulus is determined in accordance with Cordage Institute International Standard CI1500. The high modulus of the rope according to the invention makes it particularly suitable for use in applications where the rope is used under tension, e.g., in rigging, in lifting slings, and in guy lines. In one embodiment, the rope according to the invention has a modulus of at least 100 GPa, in particular at least 120 GPa, more in particular at least 140 GPa, at least 180 GPa, or even at least 200 GPa.

In a particularly preferred embodiment of the invention, the higher modulus values are combined with the higher strength-strength rations and/or the higher values for the strength under use conditions, as discussed above.

In one embodiment, the rope according to the invention shows a high performance in the Cyclic Bend Over Sheave (CBOS) test. The CBOS test is a test in which the lifetime of the rope is evaluated under dynamic loading. The rope is pulled back and forth over a sheave under tension. De sheave is characterized by its diameter relative to the diameter of the rope. This parameter is called D/d ratio with common values of 20 - 30.

The tension in the cable can be in the range of 15 - 30 % of the breaking strength. The frequency of cycling can be chosen to simulate the actual application. The test result is the number of cycles to failure of the rope. In one embodiment, the rope according to the invention shows an increase in cycles to failure in the CBOS test of at least 2, in particular at least 5, more in particular at least 7 as compared to a rope with an otherwise comparable rope with a conventional structure, i.e., a rope wherein the distance variation of at least part of the elements is a repeating oscillation, wherein the ratio between the wavelength of the oscillation and the diameter of the rope is more than 18. In one embodiment, the strength in use of the rope increases by at least 10%, in particular at least 15%, more in particular at least 20% at an initial loading level of 25.

The effect of the present invention will be particularly pronounced under stringent conditions, comprising one or more of a D/d below 30, a load >20% of the (fresh) breaking strength, fast cycling, testing under dry conditions, an a large diameter, e.g., of at least 30 mm, or larger, as indicated in the paragraph above.

It is a particular advantage of the rope according to the invention that it can be relatively free from non-polymer components. As is known in the art, fibers and filaments are essentially always treated with a surface compound, in particular to improve the electrostatic and processing properties of the fibers. More specifically, if fibers are not provided with this so-called finish individual fibers in a bundle will repulse each other through electrostatic interaction, resulting in expansion of the bundle (a phenomenon called ballooning). However, the presence of finishing components may be disadvantageous, e.g., from an environmental point of view. In particular, the possibility of leaching of hydrophilic finish compounds from a rope in an aqueous environment is not desired. It has been found that the tapes as used in the present rope do not require the presence of finish compounds to counter electrostatic effects, and therefore they make it possible to prepare a rope not suffering from leaching of this type of component.

An additional advantage in this respect is that the tapes used in the rope according to the invention are free from polymer solvent, due to their manufacturing method, as will be described in more detail below. More in particular, the tapes generally have a polymer solvent content of less than 0.05 wt.%, in particular less than 0.025 wt.%, more in particular less than 0.01 wt.%. In this, the material may be distinguished from solvent-derived polymer fibers, which show a higher solvent content, and which also do not meet various other requirements of the present invention, int. al., the ratio between width and thickness.

Thus, due to the use of the present tapes, if so desired, the rope according to the invention may have a content of non-polyethylene low-molecular weight components which is below 1 wt.%, in particular below 0.5 wt.%, more in particular below 0.25 wt.%, even more in particular below 0.1 wt.%.

Incidentally, while the presence of a finish to improve the electrostatic and processing properties of the tape is not required, as indicated above, it is possible, if so desired, to provide a finish to the tape to provide the rope with specific properties.

In fact, it has been found that the rope according to the invention allows the use of a broad range of finishes, in particular the use of uncrosslinked finishes. WO2010/015485 describes the provision of a rope comprising a fiber coated with crosslinked silicone. This is considered required, because the silicone oil conventionally used is considered to be "squeezed out" of the rope when the rope is put under tension. It has been found that when the specific tapes are used in the construction according to the invention, the "squeezing out" effect does not occur, or does not occur to an unacceptable extent. Therefore, in one embodiment, in the rope according to the invention at least part of the tapes are coated with an uncrosslinked finish, in particular a liquid silicone finish. In this context it is noted that the use of crosslinked finishes may be complicated in polyethylene ropes, because the crosslinking temperature has to be selected so that it is below the melting temperature of the polyethylene.

The rope according to the invention comprises tapes of ultra-high molecular weight polyethylene (UHMWPE), the tapes having a width to thickness ratio of at least 10.

In general, at least 10 wt.% of the elongate elements will be UHMWPE tapes, in particular at least 40 wt.%, more in particular at least 60 wt.%, still more in particular at least 80 wt.%, even more in particular at least 90 wt.%, still more in particular at least 95 wt.%.

The rope may be manufactured in accordance with the methods known in the art for manufacturing structured ropes. Examples of suitable manufacturing methods include braiding, twisting, stranding, bunching, and combinations thereof It is within the scope of the skilled person to manufacture ropes meeting the requirements stipulated above as to, e.g., oscillation, helix angle, distance variation based on the guidelines given above.

It should be noted that fusing the tapes together in whole or in part is to be avoided, as this is believed to detrimentally affect the properties of the rope.

If so desired, the rope according to the invention may be surrounded by a sleeve, wrap, tape bonding, or polymer cover, e.g., to protect the rope from environmental conditions or to provide mechanical protection to the rope. For the properties mentioned above, the sleeve, wrap, or any other cover should not be taken into account.

In one embodiment, the rope is provided with a wrap based on polyethylene tapes, in particular polyethylene tapes with a width of at least 2 mm, in particular at least 5 mm, more in particular at least 10 mm. Where the rope is thicker, it may be attractive to use tapes with a larger width, e.g., at least 25 mm. The maximum width of the tape used in the wrap will depend on the thickness of the rope, and should be selected such that the tape does not detrimentally affect the rope properties.

The tape used in the wrap preferably has one or more of the properties of the tapes building up the rope as specified elsewhere, in particular as regards strength, modulus, tape thickness, and composition, int. al as regards molecular weight and solvent content. More specifically, in one embodiment the polyethylene tapes used in the wrap are ultra-high molecular weight polyethylene tapes with a modulus of at least 100 N/tex and a strength of at least 1.2 GPa. Preferably, the tapes have a tensile strength of at least 1.5 GPa, more in particular at least 1.8 GPa, even more in particular at least 2.0 GPa, still more in particular at least 2.5 GPa, more in particular at least 3.0 GPa, still more in particular at least 4.0 GPa. Preferably the tapes have a modulus of at least 120 N/tex, more in particular at least 140 N/tex, at least 180 N/tex, or even at least 200 N/tex. For other tape properties reference is made to what is stated elsewhere in this specification.

The use of a wrap of polyethylene tape has a number of specific advantages. In the first place, it allows the manufacture of an all polyethylene rope, which makes it easy to recycle. Further, due to the PE-only composition of the tape, no leaching products are added to the rope. Further, as the tapes themselves can have high modulus and high strength they will contribute to the rope properties, e.g., the torsional stiffness of the rope may be strongly increased.

The rope according to the invention may be used in numerous applications.

In one embodiment the rope is used in industrial applications, in particular in industrial applications where the rope suffers from dynamic stress. Examples of such applications are mooring lines, tow lines, winch lines, in offshore oil and gas applications, and lifting and installation applications.

The tapes

The polyethylene tapes used in the rope of the present invention generally have a width of at least 0.5 mm, in particular at least 1 mm, more in particular at least 1.5 mm. The tape width will depend on the thickness of the rope to be manufactured. If the diameter of the rope is relatively low, the tape should not be too wide. If the diameter of the rope is high, wider tapes may be selected. As a maximum, a value of 50 mm may be mentioned.

The tapes generally gave a thickness of at most 200 microns, in particular at most 150 microns, more in particular at most 100 microns. Generally, the tape thickness is at least 5 microns, in particular at least 10 microns. A thickness range of 20 to 80 microns may be preferred.

The ratio between the width and the thickness of the tapes in the rope of the present invention is at least 10, preferably, at least 20. The ratio will also depend upon the tape width, which in turn will depend upon the desired rope diameter as indicated above. In one embodiment, the width to thickness ratio is in the range of 10-200, more in particular in the range of 30-100.

The linear density of the tapes used in the rope of the present invention may, e.g., be in the range of 500-25000 dtex. In one embodiment, it may be in the range of 800-2000 dtex. A value in this range may be attractive because it is of the same order as filament bundles which are conventionally used.

The tapes used in the present invention generally have a modulus, determined in accordance with ASTM D7744, of at least 100 GPa, in particular at least 120 GPa, more in particular at least 140 GPa, or even at least 180 GPa.

The tapes used in the rope according to the invention generally have a tensile strength of at least 1.2 GPa, in particular at least 1.5 GPa, more in particular at least 1.8 GPa, even more in particular at least 2.0 GPa, still more in particular at least 2.5 GPa, more in particular at least 3.0 GPa, still more in particular at least 4.0 GPa. Tensile strength is determined in accordance with ASTM D7744. The higher the tensile strength of the tapes, the higher the tensile strength of the rope can be.

The tapes used in the rope according to the invention generally have a creep rate lower than $5*10^{-5}$ %/s, more in particular lower than $5*10^{-6}$ %/s or even more particular, lower than $1*10^{-6}$ %/s. The lower the creep rate, the higher the loading capacity of the rope can be. A rope generally shows a higher creep than the tape due to constructional compacting of the rope during loading.

In one embodiment, the tapes used in the rope according to the invention have a 200/110 uniplanar orientation parameter $\Phi$ of at least 3. The 200/110 uniplanar orientation parameter $\Phi$ is defined as the ratio between the 200 and the 110 peak areas in the X-ray diffraction (XRD) pattern of the tape sample as determined in reflection geometry. The 200/110 uniplanar orientation parameter gives information about the extent of orientation of the 200 and 110 crystal planes with respect to the tape surface. For a tape sample with a high 200/110 uniplanar orientation the 200 crystal planes are highly oriented parallel to the tape surface. It has been found that a high uniplanar orientation is generally accompanied by a high tensile strength and high tensile energy to break. It may be preferred for the 200/110 uniplanar orientation parameter $\Phi$ to be at least 4, more in particular at least 5, or at least 7. Higher values, such as values of at least 10 or even at least 15 may be particularly preferred. The theoretical maximum value for this parameter is infinite if the peak area 110 equals zero. High values for the 200/110 uniplanar orientation parameter are often accompanied by high values for the strength and the energy to break. The 200/110 uniplanar orientation parameter $\Phi$ may be determined as is described in WO2010/007062, page 9, line 19, through page 11, line 17.

The ultra-high molecular weight polyethylene used in the present invention has a weight average molecular weight (Mw) of at least 500 000 gram/mol in particular between $1*10^6$ gram/mole and $1*10^8$ gram/mol. In one embodiment, the polyethylene has a number average molecular weight (Mn) of at least $2.0*10^5$ g/mol. The Mn may be at least $5.0*10^5$ g/mol, more in particular at least $8.0*10^5$ g/mol, or even at least 1.0 million g/mol, or even at least 1.2 million gram/mol. The use of a polymer with a relatively high Mw has the advantage of a relatively high strength; the use of the polymer with a relatively high Mn has the advantage that it contains a relatively low amount of low-molecular weight polyethylene, and as it is believed that the properties of the tape derived from the high molecular weight molecules the presence of fewer low-molecular weight molecules will lead to a tape with better properties. The use of a polymer with a relatively high Mw in combination with a relatively high Mn may be particularly preferred.

The Mn and Mw may be determined as is described in WO2010/079172. Reference may also be made to S. Talebi et al. in Macromolecules 2010, Vol. 43, pages 2780-2788.

In one embodiment, the tapes are based on disentangled PE, e.g., as described in WO 2009/007045, and WO2010/079172.

In one embodiment, the UHMWPE has a strain hardening slope of below 0.10 N/mm at 135°C. Preferably, it also has a strain hardening slope of below 0.12 N/mm at 125°C. The strain hardening slope is determined by subjecting compressed polymer to a drawing step under specific conditions.

The test is carried out as follows: polymer powder is subjected to compaction at a pressure of 200 bar, at 130°C, for 30 minutes to form tensile bars with a thickness of 1 mm, a width of 5 mm and a length of 15 mm. The bars are subjected to drawing at a tensile speed of 100 mm/min at a temperature of 125°C or 135°C. The drawing temperature is chosen such that no melting of the polymer occurs, as can be checked by DSC in simple heating mode. The bar is drawn from 10 mm to 400 mm. For the tensile test a force cell of 100N is used. The force cell measures force required for the elongation of the sample at the fixed temperature. The force/elongation curve shows a first maximum, which is also known as the yield point. The strain hardening slope is defined as the steepest positive slope in the force/elongation curve after the yield point.

In one embodiment of the present invention, the polymer has a strain hardening slope, determined at 135 °C, of below 0.10 N/mm, in particular below 0.06 N/mm, more in particular below 0.03 N/mm. In another embodiment, the polymer has a strain hardening slope, determined at 125 °C, of below 0.12 N/mm, in particular below 0.08 N/mm, more in particular below 0.03 N/mm. In a preferred embodiment, the polymer meets the stipulated requirements both at 125 °C and at 135 °C.

A low strain hardening slope means that the material has high drawability at low stress. While not wishing to be bound by theory, it is believed that this means in turn that the polymer chains in the solid states contain few entanglements, and that this will enable the manufacture of tapes with good properties In other words, a strain hardening slope within this range means that there is little entanglement between the polymer chains. In the present specification, a polyethylene with a strain hardening slope as specified above will therefore also be indicated as a disentangled polyethylene. In one embodiment of the present invention, a polyethylene is selected which can be compressed below its equilibrium melting temperature of 142°C, more in particular within the temperature range of 100-138°C, wherein the thus-obtained film can be drawn below the equilibrium meting temperature by more than 15 times its initial length.

It is preferred for the polyethylene used in the rope according to the invention to have an elastic shear modulus $G_N^0$ determined directly after melting at 160°C of at most 1.4 MPa, in particular 1.0 MPa, more in particular at most 0.9 MPa, still more in particular at most 0.8 MPa, more in particular at most 0.7 MPa. The wording "directly after melting" means that the elastic shear modulus is determined as soon as the polymer has melted, in particular within 15 seconds after the polymer has melted. For this polymer melt $G_N^0$ typically increases from 0.6 to 2.0 MPa in one, two, or more hours, depending on the molar mass of the polymer. $G_N^0$ is the elastic shear modulus in the rubbery plateau region. It is related to the average molecular weight between entanglements Me, which in turn is inversely proportional to the entanglement density. In a thermodynamically stable melt having a homogeneous distribution of entanglements, Me can be calculated from $G_N^0$ via the formula $G_N^0 = g_N \rho R T / M_e$, where $g_N$ is a numerical factor set at 1, ρ is the density in g/cm3, R is the gas constant and T is the absolute temperature in K. A low elastic shear modulus directly after melting stands for long stretches of polymer between entanglements, and thus for a low degree of entanglement. The adopted method for the investigation on changes in $G_N^0$ with the entanglements formation is the same as described in publications (Rastogi, S., Lippits, D., Peters, G., Graf, R., Yefeng, Y. and Spiess, H., "Heterogeneity in Polymer Melts from Melting of Polymer Crystals", Nature Materials, 4(8), 1st August 2005, 635-641 and PhD thesis Lippits, D.R., "Controlling the melting kinetics of polymers; a route to a new melt state", Eindhoven University of Technology, dated 6th March 2007, ISBN 978-90-386-0895-2).

In one embodiment the disentangled UHMWPE has a DSC crystallinity of at least 74%, more in particular at least 80%. In one embodiment, the UHMWPE has a DSC crystallinity of at least 85%, more in particular at least 90%. DSC crystallinity may be determined as described in WO2010/007062, paragraph bridging pages 13 and 14.

In one embodiment, the disentangled UHMWPE has a bulk density which is significantly lower than the bulk density of conventional UWMWPEs. More in particular, the UHMWPE manufactured using the catalyst system of the present invention may have a packing density below 0.25 g/cm3, in particular below 0.18 g/cm3, still more in particular below 0.13 g/cm3. The packing density may be determined in accordance with ASTM-D1895. A fair approximation of this value can be obtained as follows. A sample of UHMWPE powder as synthesised is poured into a measuring beaker of exact 100 ml. After scraping away the surplus of material, the weight of the content of the beaker is determined and the packing density is calculated.

The polymer is provided in particulate form, for example in the form of a powder, or in any other suitable particulate form. Suitable particles have a particle size of up to 5000 micron, preferably up to 2000 micron, more in particular up to 1000 micron. The particles preferably have a particle size of at least 1 micron, more in particular at least 10 micron. The particle size may be determined as specified on page 15, lines 6-12 of WO2010/079172.

The polyethylene can be a homopolymer of ethylene or a copolymer of ethylene with a co-monomer which is another alpha-olefin or a cyclic olefin both with generally between 3 and 20 carbon atoms. Examples include propene, 1-butene, 1-pentene, 1-hexene, 1-heptene, 1-octene, cyclohexene, etc. The use of dienes with up to 20 carbon atoms is also possible, e.g., butadiene or 1-4 hexadiene. The amount of (non-ethylene) alpha-olefin in the ethylene homopolymer or copolymer used in the process according to the invention preferably is at most 10 mole%, preferably at most 5 mole%, more preferably at most 1 mole%. If a (non-ethylene) alpha-olefin is used, it is generally present in an amount of at least 0.001 mole%, in particular at least 0.01 mole%, still more in particular at least 0.1 mole%.

Disentangled UHMWPE may be manufactured via processes known in the art, e.g., as described in WO2010/139720.

Tape manufacture

The tapes used in the ropes according to the invention may be manufactured through a solid state film manufacturing process comprising the steps of subjecting a starting ultra-high molecular weight polyethylene to a compacting step and a stretching step under such conditions that at no point during the processing of the polymer its temperature is raised to a value above its melting point.

The compacting step is carried out to integrate the polymer particles into a single object, e.g., in the form of a mother sheet. The stretching step is carried out to provide orientation to the polymer and manufacture the final product. The two steps are carried out at a direction perpendicular to each other. These elements may be combined in a single step, or carried out in different steps, each step performing one or more of the compacting and stretching elements. For example, in one embodiment of the process according to the invention, the process comprises the steps of compacting the polymer powder to form a mothersheet, rolling the plate to form rolled mothersheet and subjecting the rolled mothersheet to a stretching step to form a polymer film.

Where appropriate, broader tapes may be slit or split into narrower tapes at any point in time during the processing step, more in particular after stretching, between intermediate stretching steps, and before stretching. The slitting or splitting may be carried out by means known in the art, e.g., using knives, or as described in WO 2010/003971.

Where the polyethylene is disentangled polyethylene, the solid state processing thereof may be carried out as is described in WO 2009/007045 or WO2010/079172.

In one embodiment, the starting polyethylene may be a UHMWPE with a weight average molecular weight of at least 500 000 gram/mole, an elastic shear modulus G<N0>, determined directly after melting at 160<a>C of at most 1.4 MPa, in particular of at most 0.9 MPa, and a Mw/Mn ratio of at most 6

## Claims

1. Rope comprising polyethylene elongate elements oriented in the length direction of the rope wherein for at least part of the elongate elements the distance of the element to a central longitudinal rope axis varies over the length of the rope, the polyethylene elongate elements comprising tapes of ultra-high molecular weight polyethylene, **characterized in that** the tapes have a width to thickness ratio of at least 10 and a polymer solvent content below 0.05 wt.%, and **in that** the distance of at least part of the elements to the central longitudinal rope axis varies over the length of the rope between a longitudinal line which is at most 30% from the outside of the rope and a longitudinal line which is at most 30% from the central longitudinal axis of the rope.

2. Rope according to claim 1 wherein the distance variation of at least part of the elements is a repeating oscillation, wherein the ratio between the wavelength of the oscillation and the diameter of the rope is at most 15.

3. Rope according to claim 1 or 2 wherein at least part of the tapes in the rope according to the invention show a helix angle of more than 10°, in particular more than 14o, still more in particular at least 16o.

4. Rope according to any one of the preceding claims wherein the rope has a diameter of at least 30 mm, in particular at least 40 mm, more in particular at least 50 mm, still more in particular at least 60 mm, or even at least 70 mm, or even at least 100 mm.

5. Rope according to any one of the preceding claims wherein at least part of the tapes is coated with a non-crosslinked finish.

6. Rope according to any one of the preceding claims which shows an increase in cycles to failure in the CBOS test of at least 2, in particular at least 5, more in particular at least 7 as compared to an otherwise comparable rope with a conventional structure wherein the distance variation of at least part of the elements is a repeating oscillation, wherein the ratio between the wavelength of the oscillation and the diameter of the rope is more than 18.

7. Rope according to any one of the preceding claims, wherein the tapes have a ratio between the width and the thickness of at least 20.

8. Rope according to any one of the preceding claims, wherein the tapes have a tensile strength of at least 1.2 GPa, in particular at least 1.5 GPa, more in particular at least 1.8 GPa, even more in particular at least 2.0 GPa, still more in particular at least 2.5 GPa, more in particular at least 3.0 GPa, still more in particular at least 4.0 GPa.

9. Rope according to any one of the preceding claims, wherein the ultra-high molecular weight polyethylene used in the present invention has a weight average molecular weight (Mw) of at least 500 000 gram/mol in particular between $1*10^6$ gram/mole and $1*10^8$ gram/mol.

10. Rope according to any one of the preceding claims which is provided with a wrap comprising polyethylene tapes, in particular polyethylene tapes with a width of at least 2mm, in particular at least 5 mm, more in particular at least 10 mm, or even at least 25 mm.

11. Rope according to claim 10 wherein the polyethylene tapes in the wrap are ultra-high molecular weight polyethylene tapes with a modulus of at least 100 N/tex and a strength of at least 1.2 GPa.

12. Use of the rope according to any one of the preceding claims in industrial applications.

13. Use according to claim 12, wherein the industrial applications are accompanied by the occurrence of dynamic stresses, e.g., as mooring lines, tow lines, winch lines, in offshore oil and gas applications, and lifting and installation applications.

**Patentansprüche**

1. Seil, das längliche, in Längsrichtung des Seils orientierte Polyethylenelemente umfasst, wobei bei mindestens einem Teil der länglichen Elemente der Abstand des Elements zu einer zentralen Seillängsachse über die Länge des Seils variiert, wobei die länglichen Polyethylenelemente Bänder aus Polyethylen mit ultrahohem Molekulargewicht umfassen, **dadurch gekennzeichnet, dass** die Bänder ein Verhältnis von Breite zu Dicke von mindestens 10 und einen Polymer Lösungsmittelgehalt von unter 0,05 Gew.-% aufweisen, und dadurch, dass der Abstand von mindestens einem Teil der Elemente zur zentralen Seillängsachse über die Länge des Seils zwischen einer höchstens 30 % von der Außenseite des Seils entfernt verlaufenden Längslinie und einer höchstens 30 % von der zentralen Längsachse des Seils entfernt verlaufenden Längslinie variiert.

2. Seil nach Anspruch 1, wobei die Abstandsabweichung von mindestens einem Teil der Elemente eine sich wiederholende Schwingung ist, wobei das Verhältnis zwischen der Wellenlänge der Schwingung und dem Durchmesser des Seils höchstens 15 beträgt.

3. Seil nach Anspruch 1 oder 2, wobei mindestens ein Teil der Bänder in dem erfindungsgemäßen Seil einen Steigungswinkel von mehr als 10°, bevorzugt von mehr als 14° und besonders bevorzugt von mindestens 16° aufweist.

4. Seil nach einem der vorhergehenden Ansprüche, wobei das Seil einen Durchmesser von mindestens 30 mm, bevorzugt von mindestens 40 mm, bevorzugter von mindestens 50 mm, noch bevorzugter von mindestens 60 mm oder besonders bevorzugt von mindestens 70 mm oder besonders bevorzugt von mindestens 100 mm aufweist.

5. Seil nach einem der vorhergehenden Ansprüche, wobei mindestens ein Teil der Bänder mit einer nicht vernetzten Avivage beschichtet ist.

6. Seil nach einem der vorhergehenden Ansprüche, für das beim CBOS-Test eine Zunahme der Zyklen bis zum Reißen von mindestens 2, bevorzugt von mindestens 5 und noch bevorzugter von mindestens 7 im Vergleich zu einem ansonsten vergleichbaren Seil mit einer herkömmlichen Struktur zu verzeichnen ist, wobei die Abstandsabweichung von mindestens einem Teil der Elemente eine sich wiederholende Schwingung ist, wobei das Verhältnis zwischen der Wellenlänge der Schwingung und dem Durchmesser des Seils mehr als 18 beträgt.

7. Seil nach einem der vorhergehenden Ansprüche, wobei die Bänder ein Verhältnis zwischen der Breite und der Dicke von mindestens 20 aufweisen.

8. Seil nach einem der vorhergehenden Ansprüche, wobei die Bänder eine Zugfestigkeit von mindestens 1,2 GPa, bevorzugt von mindestens 1,5 GPa, bevorzugter von mindestens 1,8 GPa, noch bevorzugter von mindestens 2,0 GPa, noch bevorzugter von mindestens 2,5 GPa, noch bevorzugter von mindestens 3,0 GPa und besonders bevorzugt von mindestens 4,0 GPa aufweisen.

9. Seil nach einem der vorhergehenden Ansprüche, wobei das in der vorliegenden Erfindung verwendete Polyethylen mit ultrahohem Molekulargewicht ein Gewichtsmittel des Molekulargewichts (Mw) von mindestens 500.000 Gramm/Mol und bevorzugt zwischen $1*10^6$ Gramm/Mol und $1*10^8$ Gramm/Mol aufweist.

10. Seil nach einem der vorhergehenden Ansprüche, ausgeführt mit einer Wicklung, die Polyethylenbänder umfasst, bevorzugt Poylethylenbänder mit einer Breite von mindestens 2 mm, bevorzugt von mindestens 5 mm, bevorzugter von mindestens 10 mm oder besonders bevorzugt von mindestens 25 mm.

**11.** Seil nach Anspruch 10, wobei es sich bei den Polyethylenbändern in der Wicklung um Polyethylenbänder mit ultrahohem Molekulargewicht mit einem Modul von mindestens 100 N/tex und einer Zugfestigkeit von mindestens 1,2 GPa handelt.

**12.** Verwendung des Seils nach einem der vorhergehenden Ansprüche in industriellen Anwendungen.

**13.** Verwendung nach Anspruch 12, wobei die industriellen Anwendungen vom Auftreten dynamischer Belastungen begleitet werden, z. B. als Festmacherleinen, Schlepptaue, Windenseile, bei Offshore-Anwendungen der Öl- und Gasindustrie sowie bei Hub- und Montageanwendungen.

**Revendications**

**1.** Câble comprenant des éléments allongés en polyéthylène orientés dans la direction de la longueur du câble, dans lequel, pour au moins une partie des éléments allongés, la distance de l'élément à l'axe central longitudinal du câble varie le long du câble, lesquels éléments allongés en polyéthylène comprennent des bandes de polyéthylène à masse moléculaire ultra-haute, **caractérisé en ce que** le rapport de la largeur de ces bandes à leur épaisseur vaut au moins 10 et leur teneur en solvant de polymère est inférieure à 0,05 % en poids, et **en ce que** la distance d'au moins une partie des éléments à l'axe central longitudinal du câble varie le long du câble entre une ligne longitudinale située à 30 % au plus à partir de la surface externe du câble et une ligne longitudinale située à 30 % au plus à partir de l'axe central longitudinal du câble.

**2.** Câble conforme à la revendication 1, dans lequel la variation de distance d'au moins une partie des éléments est une oscillation répétitive et dans lequel le rapport entre la longueur d'onde de cette oscillation et le diamètre du câble vaut au plus 15.

**3.** Câble conforme à la revendication 1 ou 2, dans lequel au moins une partie des bandes, dans un câble de l'invention, présentent un angle d'hélice de plus de 10°, en particulier de plus de 14°, et encore plus particulièrement d'au moins 16°.

**4.** Câble conforme à l'une des revendications précédentes, lequel câble présente un diamètre d'au moins 30 mm, en particulier d'au moins 40 mm, plus particulièrement d'au moins 50 mm, encore plus particulièrement d'au moins 60 mm, ou même d'au moins 70 mm, ou même d'au moins 100 mm.

**5.** Câble conforme à l'une des revendications précédentes, dans lequel au moins une partie des bandes sont revêtues d'un apprêt non-réticulé.

**6.** Câble conforme à l'une des revendications précédentes, pour lequel, dans l'essai de flexion cyclique sur noyau (test CBOS), le nombre de cycles jusqu'à la rupture est augmenté d'au moins 2, en particulier d'au moins 5 et plus particulièrement d'au moins 7, par rapport à un câble par ailleurs comparable, doté d'une structure classique et dans lequel la variation de distance d'au moins une partie des éléments est une oscillation répétitive et le rapport entre la longueur d'onde de cette oscillation et le diamètre du câble vaut plus de 18.

**7.** Câble conforme à l'une des revendications précédentes, dans lequel le rapport entre la largeur des bandes et leur épaisseur vaut au moins 20.

**8.** Câble conforme à l'une des revendications précédentes, dans lequel les bandes présentent une résistance à la traction d'au moins 1,2 GPa, en particulier d'au moins 1,5 GPa, plus particulièrement d'au moins 1,8 GPa, même plus particulièrement d'au moins 2,0 GPa, encore plus particulièrement d'au moins 2,5 GPa, encore plus particulièrement d'au moins 3,0 GPa, et encore plus particulièrement d'au moins 4,0 GPa.

**9.** Câble conforme à l'une des revendications précédentes, dans lequel le polyéthylène à masse moléculaire ultra-haute utilisé dans la présente invention possède une masse molaire moyenne en poids, Mw, d'au moins 500 000 g/mol, et en particulier de $1.10^6$ à $1.10^8$ g/mol.

**10.** Câble conforme à l'une des revendications précédentes, qui est muni d'une enveloppe comportant des bandes en polyéthylène, et en particulier, des bandes de polyéthylène larges d'au moins 2 mm, en particulier d'au moins 5 mm, plus particulièrement d'au moins 10 mm, ou même d'au moins 25 mm.

**11.** Câble conforme à la revendication 10, dans lequel les bandes en polyéthylène de l'enveloppe sont des bandes en polyéthylène à masse moléculaire ultra-haute, dotées d'un module d'au moins 100 N/Tex et d'une résistance d'au moins 1,2 GPa.

**12.** Utilisation d'un câble conforme à l'une des revendications précédentes dans des applications industrielles.

**13.** Utilisation conforme à la revendication 12, dans laquelle les applications industrielles s'accompagnent de l'apparition de contraintes dynamiques, par exemple en tant que corde d'amarrage, corde de remorquage, corde de treuillage, dans des applications en installation pétrolière ou gazière off-shore, et dans des applications de levage ou de montage d'installations.

# EP 2 773 811 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100101833 A
- WO 2010015485 A
- WO 2010007062 A
- WO 2010079172 A
- WO 2009007045 A
- WO 2010139720 A
- WO 2010003971 A

### Non-patent literature cited in the description

- **S. TALEBI et al.** *Macromolecules,* 2010, vol. 43, 2780-2788
- **RASTOGI, S. ; LIPPITS, D. ; PETERS, G. ; GRAF, R. ; YEFENG, Y. ; SPIESS, H.** Heterogeneity in Polymer Melts from Melting of Polymer Crystals. *Nature Materials,* 01 August 2005, vol. 4 (8), 635-641
- Controlling the melting kinetics of polymers; a route to a new melt state. **LIPPITS, D.R.** PhD thesis. Eindhoven University of Technology, 06 March 2007